# FASCICULE DE BREVET EUROPEEN

(11) **EP 0 442 411 B1**
(45) Date de publication et mention de la délivrance du brevet: **15.03.1995**
(21) Numéro de dépôt: 91101862.0
(22) Date de dépôt: 11.02.1991
(51) Int. Cl.: H01R 11/22, H01M 2/20

(54) **Ressort du type conique pour contact électrique**
Konische Feder für einen elektrischen Kontakt
Conical spring for electric contact

(30) Priorité: 14.02.1990 FR 9001749
(43) Date de publication de la demande: 21.08.1991
(73) Titulaire: ALCATEL MOBILE COMMUNICATION FRANCE, 75008 Paris (FR)
(72) Inventeur: Boulay, Philippe, F-53170 Meslay du Main (FR)
(74) Mandataire: Weinmiller, Jürgen

(56) Documents cités:
- US-A- 3 885 848
- US-A- 4 554 226

## Description

La présente invention concerne un ressort du type conique qui assure simultanément une pression et un contact électrique (voir US-A-3 885 848).

Les équipements électriques autonomes qui ne sont pas raccordés à une source d'énergie extérieure sont pourvus de leurs propres générateurs tels que des piles ou des accumulateurs. Ces générateurs sont souvent amovibles et il est donc nécessaire d'utiliser un dispositif qui les maintient en place et qui établit le contact électrique. Il est ainsi connu d'employer des ressorts réalisés dans un matériau électriquement conducteur pour assurer ces deux fonctions. Les ressorts destinés à cette application sont en général des ressorts à lame ou des ressorts hélicoïdaux coniques.

Lorsqu'un tel ressort doit avoir un grand débattement et/ou lorsque le réceptable du générateur ne permet pas un positionnement précis de celui-ci, il sera du type hélicoïdal conique, ce qui permet d'obtenir une plus grande amplitude entre la position comprimée et la position détendue qu'avec un ressort du type à lame.

Les ressorts hélicoïdaux coniques sont couramment réalisés par enroulement d'un fil conducteur électrique de section constante sur un tronc de cône. La raideur d'un ressort filiforme dépendant directement du rapport de sa section à sa longueur, une spire d'un tel ressort sera d'autant plus raide que son diamètre sera petit. Dans le réceptacle d'un générateur, ce ressort est fixé par sa plus grande spire, la spire de l'autre extrémité, la plus petite, venant au contact de ce générateur. Le ressort est monté de cette manière pour faciliter le centrage et pour rendre l'assemblage plus solide. Ainsi, le générateur est en contact uniquement avec la plus petite spire du ressort, la totalité des autres spires s'étant comprimées auparavant. Dans certaines applications où le générateur doit acheminer un courant important, cette surface de contact s'avère insuffisante.

De plus les ressorts hélicoïdaux coniques peuvent être endommagés par des corps étrangers, notamment si ceux-ci sont introduits perpendiculairement à leurs axes.

La présente invention a ainsi pour objet un ressort du type conique pour contact électrique présentant une surface de contact accrue avec l'organe mobile auquel elle est connectée. Elle permet également de renforcer ce ressort vis-à-vis de l'introduction de corps étrangers.

Elle s'applique avantgeusement à la reprise de contact sur des générateurs tels que des piles ou des accumulateurs, mais, de manière plus générale, elle s'applique dans tous les cas ou un contact électrique par ressort est utilisé.

Le ressort du type conique pour contact électrique selon l'invention comprend un conducteur électrique enroulé autour d'un axe et se caractérise en ce qu'une portion au moins de ce conducteur délimitée longitudinalement par un bord mince a une section qui est une fonction croissante de sa distance à ce bord mince.

De plus, dans le ressort du type conique pour contact électrique, un segment au moins de ce conducteur a une section constante.

Dans un premier mode de réalisation du ressort du type conique pour contact électrique, le conducteur électrique est réalisé à partir d'une plaque d'épaisseur uniforme.

Dans un deuxième mode de réalisation du ressort du type conique pour contact électrique, le conducteur électrique est réalisé à partir d'un fil.

De plus, le ressort du type conique pour contact électrique comprend un organe de contact fixe à son extrémité fixe.

En outre, dans le ressort hélicoïdal conique pour contact électrique, certaines au moins des spires qui le composent sont partiellement imbriqués lorsqu'il est en position de repos.

Les différents objets et caractéristiques de l'invention apparaîtront maintenant de manière plus précise dans le cadre d'un exemple de réalisation donné à titre non limitatif en se référant aux figures annexées qui représentent :
- la figure 1, une vue schématique d'un ressort de type conique pour contact électrique avant conformation selon l'invention,
- la figure 2, une vue de dessus de ce même ressort après conformation,
- la figure 3, une vue en coupe de ce même ressort en phase de compression.

Les éléments présents dans différentes figures porteront une seule référence.

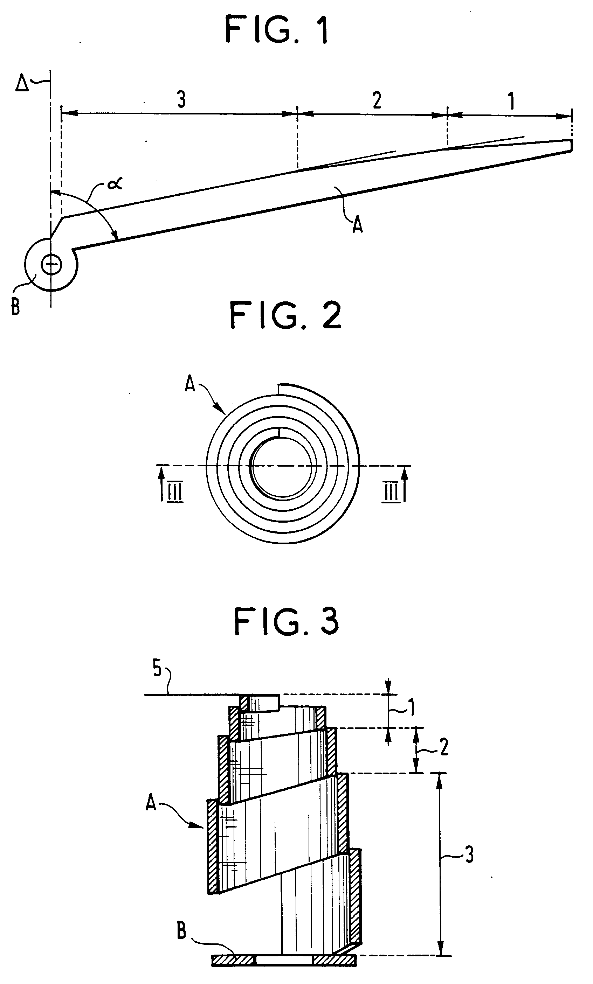

Le ressort du type conique pour contact électrique de l'invention est réalisé à partir d'une plaque d'épaisseur uniforme de matériau électriquement conducteur dont les caractéristiques mécaniques permettent effectivement de réaliser un ressort. Il sera fixé sur un support par une extrémité fixe tandis que son autre extrémité sera mobile. Il est représenté à plat dans la figure 1. Il comprend un corps A allongé qui est un conducteur électrique plus étroit à son extrémité mobile qu'à son extrémité fixe où il se prolonge par un organe de contact fixe tel qu'une rondelle B. Le corps A se décompose en trois portions contigues qui sont des quadrilatères dont un des côtés, la base, est porté par une même droite pour chacun d'eux. La première portion 1, débutant par un bord mince à la première extrémité du corps A présente une largeur qui croît linéairement à partir de cette extrémité. La deuxième portion 2, commencant également par un bord mince là où se termine la première portion 1, présente à cet endroit une largeur identique à celle de la première portion. La largeur de la deuxième portion croît linéairement jusqu'à sa frontière commune avec la troisième portion, l'accroissement de largeur par unité de longueur étant moins important que dans le cas de la première portion. La troisième portion 3, également dénommée segment, a une largeur constante égale à la largeur maximale de la deuxième portion 2.

Les différentes portions qui, pour la clarté de l'exposé, sont bien délimitées, sont à considérer uniquement dans le cadre d'une description schématique. Lors d'une réalisation pratique, il faut éviter d'avoir des angles tels que ceux qui apparaissent aux frontières des différentes sections. En fait, le profil de section du conducteur électrique A est prévu pour éviter toute discontinuité qui pourrait provoquer une amorce de rupture ou un décollement d'une partie du ressort de la face d'appui sur laquelle il doit agir.

L'axe Δ qui est dans le plan de la plaque, passe au centre de la rondelle B et fait un angle α avec les bases des trois portions 1, 2, 3.

Le ressort du type conique est alors enroulé autour de l'axe Δ sur un tronc de cône, par exemple. Les dimensions géométriques de ce tronc de cône sont prévues pour obtenir les différentes caractéristiques du ressort :
- nombre de spires,
- encombrement (longueur, diamètre)
- éventuellement imbrication partielle de deux spires adjacentes au repos.

La rondelle B est ensuite pliée pour être perpendiculaire à cet axe Δ . Le ressort ainsi conformé, est représenté vu de dessus, dans la figure 2, et vu en coupe lors du début d'une compression dans la figure 3.

Lors de la compression de ce ressort, la première portion 1, ayant le plus petit rapport section sur longueur, est la plus souple et les différentes spires qui la constituent vont progressivement, venir au contact d'une face d'appui 5, celle d'un générateur, par exemple, perpendiculaire à l'axe et opposée à la rondelle B par laquelle est maintenue le ressort. Ensuite, la portion 2 va se déformer à sont tour en exerçant une pression plus importante et en participant également au contact avec la face d'appui 5. Enfin la portion 3, de section constante, en phase finale de la compression, va fournir l'essentiel de la force appliquée sur cette face d'appui.

L'exemple de réalisation décrit et représenté sur les figures peut donner lieu à de nombreuses variantes. Le corps A du ressort qui est ici subdivisé en trois portions présentant des rapports section sur longueur définie peut prendre une toute autre forme. L'élément important est qu'une spire se déformera d'autant plus facilement que le rapport de sa section à son diamètre sera petit. Ainsi, pour un ressort d'encombrement donné, devant appliquer une pression donnée, il est possible de choisir le nombre de spires qui seront effectivement en contact avec la face d'appui en définissant la relation qui lie la largeur d'une section du corps et la position de cette section le long de ce corps.

L'organe de contact fixe dont la fonction est de permettre le raccordement du ressort à une liaison électrique externe a été représenté par une rondelle B. Ce n'est pas une limitation de l'invention car un organe d'une toute autre forme peut convenir pour remplir cette fonction.

Dans une variante de réalisation, le corps A du ressort n'est pas réalisé à partir d'une plaque mais à partir d'un fil. Ce fil comprend une partie tronconique qui présente la même caractéristique que les premières 1 et deuxième 2 portions du précédent mode de réalisation, à savoir une section diminuant régulièrement de l'une à l'autre de ses extrémités. Ce fil peut, de plus, comprendre une partie cylindrique de section constante correspondant à la troisième portion 3 du ressort réalisé à partir d'une plaque.

Le ressort du type conique objet de l'invention permet ainsi d'améliorer le contact électrique avec la face d'appui d'une part en augmentant la surface de contact, d'autre part en agissant sur la pression de contact de chaque spire.

De plus, il est possible d'imbriquer, partiellement les spires du ressort, celui-ci étant au repos, tel que c'est représenté sur la figure 3. Le ressort est dans ce cas beaucoup moins fragile vis-à-vis d'un corps étranger.

Le ressort du type conique est ainsi dénommé, car selon, l'invention, il n'est pas indispensable que le conducteur soit enroulé sur un tronc de cône. La forme de l'enroulement peut en effet être bien différente pourvu que deux sections distinctes du conducteur ne donnent en aucun cas des projections orthogonales sur le plan d'appui 5 ayant une partie commune.

## Revendications

1. Ressort du type conique pour contact électrique comprenant un conducteur électrique (A) enroulé autour d'un axe (Δ) caractérisé en ce qu'une portion (1, 2) au moins dudit conducteur délimitée longitudinalement par un bord mince a une section qui est une fonction croissante de sa distance audit bord mince.

2. Ressort du type conique pour contact électrique selon la revendication précédente caractérisé en ce qu'un segment (3) au moins dudit conducteur (A) a une section constante.

3. Ressort du type conique pour contact électrique selon la revendication 1 ou 2 caractérisé en ce que ledit conducteur électrique (A) est réalisé à partir d'une plaque d'épaisseur uniforme.

4. Ressort du type conique pour contact électrique selon la revendication 1 ou 2 caractérisé en ce que ledit conducteur électrique est réalisé à partir d'un fil.

5. Ressort du type conique pour contact électrique selon l'une quelconque des revendications précédentes caractérisé en ce qu'il comprend un organe de contact fixe (B) à son extrémité fixe.

6. Ressort du type conique pour contact électrique selon l'une quelconque des revendications précédentes caractérisé en ce que certaines au moins des spires qui le composent sont partiellement imbriqués lorsqu'il est en position de repos.

## Patentansprüche

1. Konische Feder zur elektrischen Kontaktgabe, mit einem elektrischen Leiter (A), der um eine Achse (Δ) gewickelt ist, dadurch gekennzeichnet, daß mindestens ein Abschnitt (1, 2) des Leiters, der in Längsrichtung von einem schmalen Rand begrenzt ist, einen Querschnitt aufweist, dessen Wert mit dem Abstand zum schmalen Rand zunimmt.

2. Konische Feder zur elektrischen Kontaktgabe nach Anspruch 1, dadurch gekennzeichnet, daß mindestens ein Segment (3) des Leiters (A) einen konstanten Querschnitt aufweist.

3. Konische Feder zur elektrischen Kontaktgabe nach Anspruch 1 oder 2, dadurch gekennzeichnet, daß der elektrische Leiter (A) aus einem Blech gleichmäßiger Dicke hergestellt ist.

4. Konische Feder zur elektrischen Kontaktgabe nach Anspruch 1 oder 2, dadurch gekennzeichnet, daß der elektrische Leiter aus einem Draht hergestellt ist.

5. Konische Feder zur elektrischen Kontaktgabe nach einem beliebigen der vorhergehenden Ansprüche, dadurch gekennzeichnet, daß er ein feststehendes Kontaktorgan (B) an seinem festen Ende aufweist.

6. Konische Feder zur elektrischen Kontaktgabe nach einem beliebigen der vorhergehenden Ansprüche, dadurch gekennzeichnet, daß mindestens bestimmte Windungen, die die Feder bilden, mindestens teilweise überlappen, wenn sich die Feder in der Ruhestellung befindet.

## Claims

1. Conical electrical contact spring comprising an electrical conductor (A) wound around an axis (Δ) characterised in that at least one portion (1, 2) of said conductor delimited longitudinally by a thin edge has a cross-section which is an increasing function of its distance from said thin edge.

2. Conical electrical contact spring according to claim 1 characterised in that at least one segment (3) of said conductor (A) has a constant cross-section.

3. Conical electrical contact spring according to claim 1 or claim 2 characterised in that said electric conductor (A) is made from uniformly thick plate.

4. Conical electrical contact spring according to claim 1 or claim 2 characterised in that said electric conductor is made from wire.

5. Conical electrical contact spring according to any one of the preceding claims characterised in that it comprises a fixed contact member (B) at its fixed end.

6. Conical electrical contact spring according to any one of the preceding claims characterised in that at least some of its turns are partially interleaved when it is in a rest position.
